# FASCICULE DE BREVET EUROPEEN

(11) **EP 3 239 598 B1**
(45) Date de publication et mention de la délivrance du brevet: **13.10.2021**
(21) Numéro de dépôt: 17167370.0
(22) Date de dépôt: 20.04.2017
(51) Int. Cl.: F21S 41/141, F21S 41/19, F21S 41/32, F21S 41/675, F21S 43/19

(54) **MODULE LUMINEUX ROTATIF**
DREHBARES LEUCHTMODUL
ROTARY LIGHT MODULE

(30) Priorité: 28.04.2016 FR 1653832
(43) Date de publication de la demande: 01.11.2017
(73) Titulaire: Valeo Vision, 93012 Bobigny Cedex (FR)
(72) Inventeur: CHOLLEY, Benoit, 49000 Angers (FR)

(56) Documents cités:
- US-A- 1 369 953
- US-A1- 2011 019 438

## Description

L'invention a trait au domaine de l'éclairage et/ou de la signalisation, notamment pour véhicule automobile. Plus particulièrement, l'invention a trait à un module lumineux pour véhicule automobile, ainsi qu'à un dispositif d'éclairage et/ou de signalisation comprenant un tel module lumineux.

Des dispositifs d'éclairage et/ou de signalisation peuvent comporter un ou plusieurs modules lumineux montés rotatifs autour d'un axe, notamment pour répondre à des problématiques d'éclairage adaptatif. Notamment, le document EP 295 74 64 décrit un dispositif d'éclairage et/ou de signalisation pour véhicule automobile qui comprend un boîtier et un ensemble d'au moins deux modules lumineux, dans lequel au moins une partie de chaque module lumineux est montée mobile en rotation autour d'un axe sous l'effet d'un actionneur pour déplacer transversalement le faisceau lumineux correspondant en sortie du module lumineux. Un dispositif de commande associé est apte à élaborer distinctement pour chaque module lumineux des instructions de commande d'éclairage spécifique en fonction des conditions de circulation. Les documents US 2011/019438 A1 et US 1 369 953 décrivent des modules lumineux pour véhicule automobile connus.

On comprend que la mise en place d'éléments tournants dans un dispositif d'éclairage nécessite la prise en compte des câbles d'alimentation électriques nécessaires à l'alimentation des sources de lumière associées au dispositif d'éclairage. Il convient que, dans le cas où la source est disposée au centre du dispositif et que des câbles doivent traverser ce dispositif pour venir alimenter la source de lumière, la rotation des éléments tournants ne soit pas gênée par la présence de câbles et que cette rotation ne génère pas de dégradation de ces câbles.

L'invention a pour objectif de proposer un support porteur d'une source de lumière à l'origine du faisceau lumineux projeté en sortie du module lumineux, configuré pour autoriser l'alimentation électrique de la source de lumière sans interférer dans le mouvement de rotation d'un module lumineux rotatif. L'invention est une amélioration des dispositifs d'éclairage et/ou de signalisation pour véhicule automobile connus de l'art antérieur, notamment en ce qui concerne le guidage en rotation d'un module lumineux pour un déplacement transversal du faisceau lumineux qu'il génère et en ce qui concerne la gestion des câbles d'alimentation électrique dans un tel guidage en rotation.

Dans ce double contexte, l'invention a pour objet un module lumineux notamment pour véhicule automobile, comprenant au moins une source de lumière apte à émettre des rayons lumineux, au moins un élément support portant ladite source de lumière, au moins un câble d'alimentation électrique de ladite au moins une source lumineuse, au moins un élément de déviation optique agencé de manière à dévier les rayons lumineux émis par la au moins une source de lumière pour former un faisceau lumineux projeté en sortie du module lumineux, un dispositif de guidage pour guider en rotation l'élément de déviation optique autour d'un axe de rotation, afin de déplacer transversalement le faisceau lumineux projeté.

Selon l'invention, le support comporte une première partie et une deuxième partie entre lesquelles est intercalée au moins une partie du dispositif de guidage en rotation de l'élément de déviation optique. La première partie du support est porteuse de la source de lumière, que ce soit directement ou indirectement par l'intermédiaire par exemple d'une plaque de circuits imprimés fixée sur une face de cette première partie du support. Et ledit au moins un câble traverse le dispositif de guidage en rotation pour être connecté à ladite source de lumière. Le dispositif de guidage en rotation consiste en un stator solidaire de la deuxième partie du support et en un rotor solidaire de l'élément de déviation optique et configuré pour tourner autour du stator.

Par déplacement transversal du faisceau lumineux, on comprend que l'orientation générale du faisceau projeté en sortie du module, c'est-à-dire en direction de la scène de route en amont du véhicule, varie dans un plan perpendiculaire à l'axe de rotation de l'élément de déviation optique.

On s'assure ainsi, au voisinage de la source de lumière, que l'élément de déviation optique peut tourner avec précision autour du premier axe de rotation, notamment grâce au dispositif de guidage, sans que cette rotation soit gênée par la présence de câbles, puisque ceux-ci s'étendent sensiblement le long du premier axe de rotation, au moins à travers le dispositif de guidage en rotation, du fait de la configuration spécifique du support.

Selon une caractéristique de l'invention, le au moins un câble, ou faisceau de câbles le cas échéant, peut être décomposé en une pluralité de portions successives, parmi lesquelles :
- une première portion de raccordement à un module de commande, agencée au moins en partie dans la deuxième partie du support, qui peut notamment être agencée de manière à venir en recouvrement de la première partie du support et du dispositif de guidage en rotation,
- une deuxième portion intermédiaire, traversant le dispositif de guidage en rotation, et
- une troisième portion de raccordement à la source de lumière.

Notamment, on peut prévoir que le faisceau de câbles traverse le dispositif de guidage en rotation sensiblement au centre de celui-ci, ou en d'autres termes, centré sur le premier axe de rotation.

L'élément de déviation optique est mobile en rotation sous l'effet d'un actionneur, qui peut notamment comporter un arbre de sortie s'étendant le long du premier axe de rotation et portant l'élément de déviation optique.

Avantageusement, l'actionneur et le dispositif de guidage en rotation sont disposés de part et d'autre de l'élément de déviation optique le long du premier axe de rotation. On comprend que l'on évite ainsi un agencement en porte-à-faux, dans lequel la partie de l'élément de déviation optique à l'opposé de l'actionneur aurait tendance à se décaler de l'axe de rotation.

Selon une première série de caractéristiques, prises seules ou en combinaison, on pourra prévoir que :
- la première partie du support présente une première face porteuse de la source de lumière, une deuxième face opposée tournée vers la deuxième partie du support et une face périphérique reliant axialement la première et la deuxième face ;
- la troisième portion du faisceau de câbles est disposée le long de la deuxième face et contre la face périphérique, de sorte que le faisceau de câbles est au moins partiellement désaxé dans cette troisième portion par rapport au premier axe de rotation de l'élément de déviation optique ;
- une empreinte est agencée au moins sur la deuxième face pour loger la troisième portion du faisceau de câbles ;
- un méplat est formé axialement par usinage de la face périphérique, ledit faisceau de câble étant plaqué contre la face dudit méplat.

Dans le cas où la source de lumière est portée indirectement par la première partie du support, une plaque de support de la source de lumière, et le cas échéant une plaque de circuits imprimés associée à une diode électroluminescente formant la source de lumière, présente une première face porteuse de la source de lumière et une deuxième face disposée contre la première face de la première partie du support, ledit faisceau de câbles étant connecté sur une deuxième face opposée de la plaque de support.

Selon une caractéristique de l'invention, le module peut comporter un fourreau de guidage du faisceau de câbles fixé sur la première partie du support. Ce fourreau pourra notamment être fixé sur la première partie du support au moins au niveau de l'empreinte.

En outre l'invention possède au moins l'une des caractéristiques suivantes, considérées isolément ou en combinaison :
- la première partie du support et/ou la deuxième partie du support est réalisé en un matériau métallique conducteur de chaleur, notamment en aluminium ;
- le dispositif de guidage en rotation consiste en un stator solidaire de la deuxième partie du support et en un rotor solidaire des éléments de déviation optique et configuré pour tourner autour du stator ;
- le rotor et/ou le stator peuvent être réalisés en un matériau plastique ;
- le stator présente une forme cylindrique à section circulaire ;
- le rotor présente une portion annulaire dimensionnée pour entourer ledit stator ;
- le rotor comporte au moins deux pattes de fixation à l'élément de déviation optique disposées en saillie de ladite portion annulaire ; de préférence, les deux pattes de fixation sont diamétralement opposées ;
- chaque patte de fixation peut comporter une jambe prolongeant axialement la portion annulaire de guidage et un doigt prolongeant sensiblement perpendiculairement l'extrémité libre de ladite jambe ;
- la patte de fixation est rendue solidaire de l'élément de déviation optique, notamment par bouterollage, vissage ou soudage ;
- le dispositif de guidage en rotation peut comporter un roulement à billes, agencé entre le rotor et le stator ;
- le stator est enserré entre les deux parties du support ;
- le stator peut comporter des moyens de fixation communs aux deux parties du support et au stator, notamment des vis de serrage ;
- la première partie du support présente une face externe tournée à l'opposé du stator et de la deuxième partie du support, ladite source de lumière étant portée sur ladite face externe ;
- au moins le stator est percé axialement pour laisser le passage à des câbles d'alimentation de la source de lumière ; on pourra prévoir en outre que l'une et/ou l'autre des parties du support sont également percées ;
- la deuxième partie du support présente une cavité de réception du stator et de la première partie du support ; le stator et la portion annulaire du rotor peuvent être escamotés dans ladite cavité.

L'élément de déviation optique peut consister en un réflecteur de forme sensiblement elliptique, la source de lumière étant disposée sensiblement au voisinage d'un premier foyer dudit réflecteur.

Selon une caractéristique de l'invention, l'élément de déviation optique peut par ailleurs être monté mobile en rotation autour d'un deuxième axe de rotation sensiblement perpendiculaire au premier axe de rotation pour déplacer dans une autre direction que la direction transversale précédemment décrite, par exemple dans une direction verticale, le faisceau lumineux correspondant en sortie du module lumineux. De préférence, le deuxième axe de rotation est porté par la deuxième partie du support associé au module lumineux.

Selon une autre série de caractéristiques, prises seules ou en combinaison avec les caractéristiques qui précèdent, propres à la source de lumière, on pourra prévoir que :
- la source de lumière comprend au moins un élément émissif à semi-conducteur ;
- la source de lumière est une diode électroluminescente ;
- le module comprend un substrat de connexion électrique apte à alimenter électriquement la source de lumière ;
- le substrat de connexion est une carte de circuit imprimé, une carte de circuit imprimé flexible ou un dispositif d'interconnexion à géométrie variable ;
- la source lumineuse est agencée sur le substrat de connexion électrique.

L'invention porte également sur un dispositif d'éclairage et/ou de signalisation comprenant au moins un module lumineux tel qu'il vient d'être présenté précédemment. Le dispositif peut comporter notamment un boîtier définissant avec une glace de fermeture un logement de réception d'au moins un module lumineux. Le faisceau lumineux projeté en sortie de module lumineux est configuré pour traverser cette glace de fermeture avant d'être projeté sur la scène de route en amont du véhicule. De préférence, ce dispositif d'éclairage et/ou de signalisation comprend trois modules lumineux selon l'invention. Notamment dans ce cas, et dès lors que l'on a plusieurs modules lumineux agencés dans un dispositif lumineux commun, les faisceaux lumineux projetés par chacun des modules sont configurés pour former un faisceau lumineux global, répondant notamment à des normes réglementaires d'éclairage et/ou de signalisation de véhicule automobile.

D'autres caractéristiques et avantages de la présente invention apparaitront plus clairement à l'aide de la description et des dessins parmi lesquels :
- la figure 1 est une vue en perspective de trois quart avant d'un module lumineux, selon un mode de réalisation de l'invention ;
- la figure 2 est une vue éclatée en perspective du module lumineux représenté sur la figure 1 ;
- la figure 3 est une vue en perspective de trois quarts arrière du module lumineux représenté sur la figure 1, une partie venant en recouvrement du module dans la figure 1 étant ici non représentée pour faciliter la lecture de la figure ;
- la figure 4 est une vue en perspective d'un détail du module lumineux représenté sur la figure 3 ; et
- la figure 5 est une vue en perspective de trois quart avant d'un dispositif d'éclairage et/ou de signalisation comportant un ensemble de trois modules lumineux selon le mode de réalisation de l'invention représenté sur les figures 1 à 4.

Dans la description qui va suivre, on adoptera à titre non limitatif une orientation longitudinale, verticale et transversale selon l'orientation traditionnellement utilisée dans l'automobile. De plus, les termes inférieur et supérieur doivent être interprétés lorsque l'objet est en position normale d'utilisation.

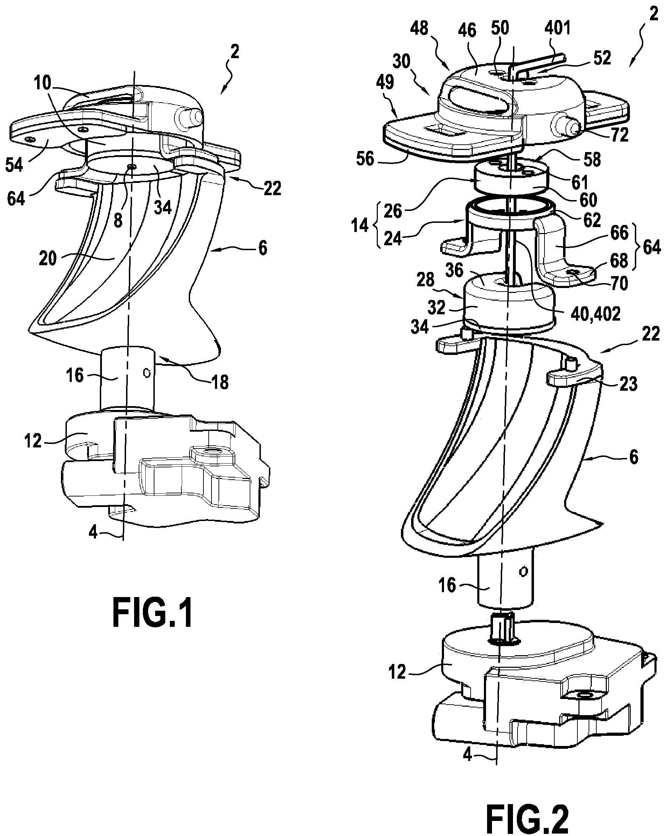

Les figures 1 à 3 représentent un module lumineux 2 mobile en rotation autour d'un axe de rotation 4.

Ce module lumineux 2 comprend au moins un élément de déviation optique 6 de rayons émis par une source de lumière 8 portée par un support 10. Le ou les éléments de déviation optique 6 sont agencés autour de l'axe de rotation 4 et ils sont entrainés en rotation par un actionneur 12 autour de l'axe de rotation 4 pour déplacer transversalement un faisceau lumineux correspondant en sortie du module lumineux 2.

Les éléments de déviation optique 6 coopèrent avec le support 10 venant en recouvrement du module lumineux 2, notamment par l'intermédiaire d'un dispositif de guidage en rotation 14 (notamment visibles sur la figure 2). On comprend que le support 10 est d'une part porteur de la source de lumière 8, qui émet des rayons en direction des éléments de déviation optique 6, et d'autre part porteur d'une partie du dispositif de guidage en rotation 14 des éléments de déviation optique 6 autour de l'axe de rotation 4. Les éléments de déviation optique 6, qui seront décrit plus en détails ci-après, sont disposés entre le dispositif de guidage 14 et l'actionneur 12 relativement à leur agencement le long de l'axe de rotation 4.

Des moyens de commande (ici non représentés) pilotent l'actionneur 12. Un mouvement est transmis par cet actionneur 12 à un arbre de sortie 16, qui transmet aux éléments de déviation optique 6 le mouvement de rotation commandé autour de l'axe de rotation 4. Tel que représenté, l'arbre de sortie 16 est rendu solidaire des éléments de déviation optique 6 au niveau d'une première extrémité 18, ici considérée comme inférieure par rapport à l'orientation définie précédemment.

Les éléments de déviation optique 6 consistent ici en un réflecteur elliptique ou parabolique, avec une face réfléchissante 20 configurée pour réfléchir les rayons de lumière émis par la source de lumière 8, qui est sensiblement disposée au voisinage d'un premier foyer des éléments de déviation optique 6. Un faisceau lumineux est ainsi généré pour former un faisceau réglementaire du point de vue de l'éclairage et/ou de la signalisation d'un véhicule automobile.

On notera que sans sortir du contexte de l'invention, les éléments de déviation optique 6 peuvent prendre différentes formes dès lors qu'ils sont entraînés en rotation par un actionneur 12 à une première extrémité relativement à l'axe de rotation 4 et que leur agencement par rapport à la source de lumière permet de former un faisceau réglementaire.

Au voisinage d'une deuxième extrémité 22 des éléments de déviation optique 6, ici l'extrémité désignée supérieure selon l'orientation décrite précédemment, c'est-à-dire à l'extrémité opposée à la première extrémité 18 où s'étend l'actionneur 12, sont disposés le dispositif de guidage en rotation 14 par l'intermédiaire desquels les éléments de déviation optique 6 coopèrent avec le support 10.

Notamment afin de permettre la fixation d'une partie de ce dispositif de guidage en rotation 14 sur les éléments de déviation optique 6, on prévoit à la deuxième extrémité 22 un bord 23 qui forme, à la périphérie de la face réfléchissante 20, une surface d'appui pour cette partie du dispositif de guidage en rotation.

On comprend que la disposition du dispositif de guidage en rotation 14 et des moyens d'entraînement que forment l'actionneur 12 et l'arbre de sortie 16, de part et d'autre des éléments de déviation optique 6, permet un guidage optimal en rotation des éléments de déviation optique autour de l'axe de rotation.

Le dispositif de guidage en rotation 14 et l'arbre de sortie 16 rendent aptes les éléments de déviation optique 6 à effectuer une rotation allant jusqu'à 360 degrés autour du premier axe de rotation 4, sensiblement vertical, sans effort sur l'actionneur 12, et avec une grande précision dans le positionnement relatif des éléments de déviation optique 6 et de la source de lumière 8, avantageusement centrée sur l'axe de rotation 4.

On va maintenant décrire plus en détails le support 10 et le dispositif de guidage en rotation 14, tels qu'ils viennent d'être présentés, notamment en se référant à la figure 2 qui représente le support 10 dans une vue éclatée.

Le support 10 est formé de deux parties entre lesquelles sont agencés le dispositif de guidage en rotation 14 qui eux comportent un rotor 24 et un stator 26, l'un solidaire des éléments de déviation optique 6 et l'autre solidaire du support 10.

Le support 10 comporte une première partie 28 et une deuxième partie 30 qui peuvent former des dissipateurs thermiques réalisés en un matériau métallique conducteur de chaleur, notamment en aluminium. Ces deux parties du support 10 sont aptes à porter le dispositif de guidage en rotation 14 et/ou la ou des sources de lumière.

La première partie 28 du support 10 présente une forme sensiblement cylindrique avec un diamètre défini et une épaisseur non nulle, ses dimensions étant définies pour autoriser une coopération et une complémentarité de forme avec une partie du dispositif de guidage 14 et la deuxième partie 30 du support 10, telle que décrit ci-après.

La première partie 28 du support 10, telle que notamment représentée sur la figure 2, présente deux faces d'extrémité opposées et une face périphérique 32 reliant axialement ces deux faces d'extrémité. Une première face d'extrémité, dite externe, est porteuse de la source de lumière 8 centrée sur l'axe de rotation 4, cette première face externe étant dirigée vers les éléments de déviation optique 6. Dans le cas particulier illustré, la source de lumière 8 est disposée sur la première face d'une première plaque de support 34, qui est rapportée sur la face d'extrémité externe de la première partie 28 du support 10. Une deuxième face d'extrémité 36, dite interne, de la première partie 28 du support 10 est tournée vers la deuxième partie 30 du support 10 (visible sur la figure 2). Cette deuxième face d'extrémité interne 36 présente une empreinte 38, dimensionnée pour pouvoir escamoter un faisceau 40 de câbles d'alimentation de la source de lumière tel qu'il va être décrit ci-après, sans que ceux-ci empêchent le stator 26 d'être plaqué contre la face d'extrémité interne 36 de la première partie 28 du support 10.

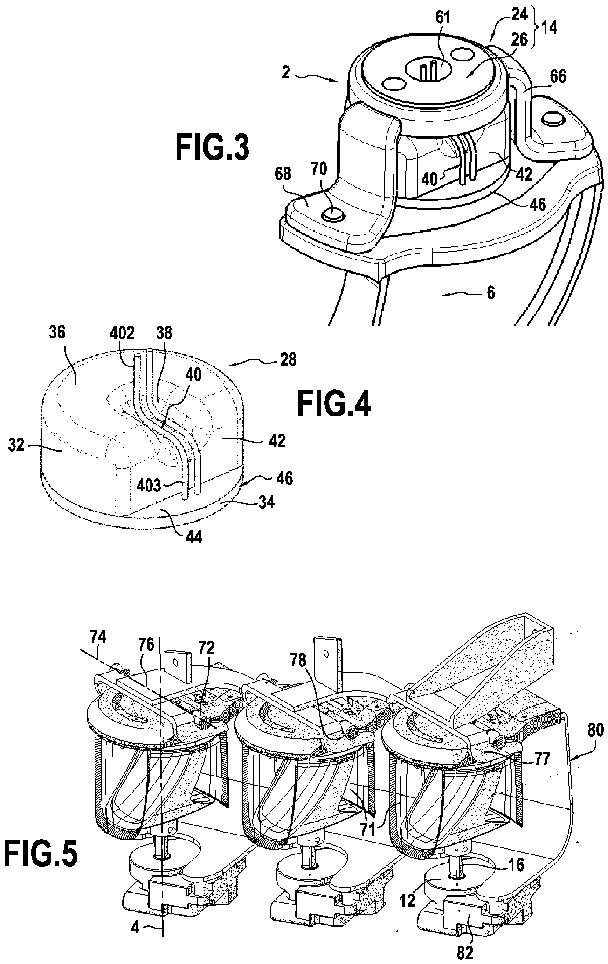

Par ailleurs, tel que cela est notamment visible sur les figures 3 et 4, la première partie 28 du support 10 comporte un méplat 42 qui est usiné sur la face périphérique 32, la première partie du support étant disposée dans le module lumineux de sorte que ce méplat soit tourné vers l'arrière du module lumineux, c'est-à-dire qu'il ne soit pas visible par un observateur externe.

Le méplat 42 est réalisé axialement par découpe sur toute la hauteur de la face périphérique 32 depuis la face d'extrémité interne 36 jusqu'à la face d'extrémité externe, laissant dégagée une partie de la plaque de support 34, de sorte qu'un palier 44 est formé entre le méplat 42 et un bord périphérique 46 de la plaque de support 34. On génère ainsi un emplacement libre pour réaliser la connexion entre l'extrémité des câbles du faisceau et la plaque de support.

La deuxième partie 30 du support 10 vient en recouvrement du module lumineux 2, notamment des éléments de déviation optique 6 et de la première partie 28 du support 10. Cette deuxième partie 30 du support 10 comporte principalement une portion centrale 48 et une ou plusieurs portions périphériques 49 qui prolongent latéralement ladite portion centrale 48.

La portion centrale 48 présente la forme d'une cuvette comportant une paroi de fond et une paroi périphérique qui prolonge sensiblement perpendiculairement la paroi de fond sur tout le pourtour de celle-ci. La portion centrale 48 présente sensiblement une forme cylindrique de section circulaire. Tel que cela sera décrit plus en détails ci-après, la deuxième partie 30 est orientée par rapport à la première partie 28 de sorte que la cavité formée à l'intérieur de la cuvette est tournée vers la première partie, de manière à former un logement pour cette première partie 28 et le dispositif de guidage en rotation.

En d'autres termes, la portion centrale 48 consiste en une cavité de réception d'une partie des composants du module lumineux 2, notamment d'une partie du dispositif de guidage en rotation 14 et de la première partie 28 du support 10. Les dimensions de cette cavité de réception dépendront des dimensions des composants qu'elle doit loger.

Par ailleurs, la paroi de fond de la portion centrale 48 est percé de deux orifices 50 traversants permettant le passage de moyens de vissage, ici non représentés, pour la fixation de cette deuxième partie 30 du support 10 à au moins une partie du dispositif de guidage en rotation 14. On pourra prévoir que les moyens de vissage passant par ces orifices traversants 50 permettent en outre la fixation de la deuxième partie 30 avec la première partie 28 du support 10.

La deuxième partie 30 du support 10 présente au moins une fenêtre 52 d'accès à l'intérieur de la cavité formant logement pour le dispositif de guidage en rotation et la première partie 28 du support 10. Ces fenêtres permettent le passage du faisceau de câbles tel qu'il va être décrit ci-après pour l'alimentation des sources de lumière tout en permettant d'alléger la deuxième partie 30 du support 10.

La portion périphérique prend la forme d'un plateau qui s'étend dans un prolongement sensiblement perpendiculaire de la paroi périphérique de la portion centrale 48. Au moins une partie de cette portion périphérique s'étend vers l'avant du véhicule lorsque le module lumineux 2 est mis en place dans le véhicule. Ledit plateau 49 est sensiblement plan et perpendiculaire à l'axe de rotation 4 et il porte au moins une source de lumière additionnelle 54 sur sa face inférieure, c'est-à-dire la face en regard des éléments de déviation optique 6. On comprendra que la longueur du plateau 49 devra autoriser la disposition de cette source de lumière additionnelle de sorte qu'elle soit décalée transversalement par rapport à l'axe de rotation 4. La face inférieure du plateau 49 pourra recevoir une deuxième plaque de circuits imprimés 56 sur laquelle est disposée la source de lumière additionnelle 54.

Nous allons maintenant décrire plus précisément le dispositif de guidage en rotation 14 autour de l'axe de rotation 4 du module lumineux 2. Tel que précisé précédemment, ce dispositif de guidage en rotation 14 consiste en un rotor 24 et un stator 26, ceux-ci étant agencés entre les deux parties 28, 30 du support 10.

Le stator 26 est solidaire de chacune des deux parties 28, 30 du support 10 et le rotor 24, agencé pour tourner autour du stator 26, est solidaire des éléments de déviation optique 6.

Le stator 26 présente une forme cylindrique à section circulaire, comprenant deux faces parallèles opposées, dites face supérieure 58 et face inférieure, et une face latérale 60 reliant axialement les deux faces opposées. Le stator comprend des orifices traversants axialement celui-ci depuis la face supérieure 58 jusqu'à la face inférieure, de sorte que des moyens de vissage évoqués précédemment et non représentés permettent la fixation du stator d'une part à la deuxième partie 30 du support 10, en plaquant le stator au fond de la cavité de réception de cette deuxième partie 30 du support, et d'autre part à la première partie 28 du support 10 qui est plaquée contre la face inférieure du stator.

Le stator 26 est ainsi enserré entre les deux parties 28, 30 du support 10.

Le stator 26 est percé en son centre d'un orifice central 61 pour permettre le passage du faisceau de câbles 40 de connexion de la source de lumière 8, ce faisceau de câbles 40 provenant de l'extérieur du module et traversant au préalable la deuxième partie 30 du support. On comprend qu'il importe que le faisceau de câbles 40 traverse le stator par le centre, afin de pas gêner la rotation du rotor 24 autour du stator 26 fixe. Le faisceau de câbles est connecté sur la deuxième face de la première plaque de circuits imprimés 34, après avoir traversé le stator en son centre, et avoir longé la première partie 28 du support 10 dans l'empreinte 38, afin là encore de ne pas gêner la rotation du rotor.

Le rotor 24 comporte une portion annulaire 62 d'un diamètre intérieur supérieur au diamètre extérieur du stator 26, de manière à venir entourer le stator 26. Au moins deux pattes de fixation 64 s'étendent en saillie de la portion annulaire 62. Tel que représenté, les deux pattes de fixations 64 sont diamétralement opposées de part et d'autre de la portion annulaire 62. Chaque patte de fixation 64 consiste en une jambe 66 prolongeant axialement la portion annulaire 62 et en un doigt 68 prolongeant sensiblement perpendiculairement une extrémité libre de ladite jambe 66. Le doigt 68 comprend un orifice ou un moyen de fixation 70 configuré pour coopérer avec le bord 23 prévu à l'extrémité supérieure 22 des éléments de déviation optique 6. On pourra prévoir indifféremment une fixation par bouterollage, rivetage ou encore par vissage.

Nous allons maintenant décrire, plus en détails, la disposition du dispositif de guidage en rotation 14 et du support 10 dans le module lumineux 2.

Tel que décrit précédemment, le rotor 24 et le stator 26 sont agencés au moins en partie entre la première partie 28 et la deuxième partie 30 du support 10, notamment en étant logés au moins en partie dans la cavité de réception aménagée dans la portion centrale 48 de la deuxième partie 30 du support 10, cette cavité étant dimensionnée pour recevoir le stator 26, une partie du rotor 24 et une partie de la première partie 28 du support 10, ces composants étant empilés les uns sur les autres.

L'empilement de ces différents composants nécessite une complémentarité de forme entre ces composants. Le diamètre du stator 26 et l'épaisseur de la portion annulaire 62 du rotor 24 sont définis par rapport aux dimensions de la cavité de réception. Le stator 26 doit pouvoir loger dans la cavité et un espace libre suffisant doit être laissé dans la cavité de réception entre la paroi périphérique de la portion centrale 48 définissant cette cavité et la face latérale 60 du stator 26, pour que la portion annulaire 62 du rotor 24 puisse être insérée entre la paroi périphérique de la portion centrale et la face latérale 60 du stator 26 et que cette portion annulaire puisse tourner librement autour du stator 26 à l'intérieur de la cavité.

Dans une position assemblée des différents composants, le rotor 24 est agencé autour du stator, dans la zone de sa portion annulaire 62, et il s'étend le long de la première partie 28 du support 10, dans la zone de ses deux pattes de fixation 64 disposées de façon diamétralement opposée de part et d'autre de cette première partie 28. Le rotor 24 est rendu solidaire des éléments de déviation optique 6 à l'aide des deux pattes de fixation 64. Le rotor 24 s'étend axialement le long de la face périphérique de la première partie 28 du support 10 jusqu'aux éléments de déviation optique 6, de sorte que lorsque l'ensemble est fixé, la première partie 28 du support 10 est disposé à l'intérieur du rotor.

On comprend que, lorsque l'ensemble est monté, le rotor 24 et le stator 26 consistent en deux formes complémentaires autorisant la rotation du rotor 24 et des éléments de déviation optique 6 associés autour du stator 26 fixe sur le support 10. Dans une variante de réalisation non représentée, le rotor 24 et les éléments de déviation optique 6 peuvent former une seule pièce, monobloc en ce que la séparation de ces deux parties entraîne la destruction de l'une ou de l'autre, de sorte que l'on évite les jeux de montage entre le rotor 24 et les éléments de déviation optique 6 qui apparaissent lorsque ces deux pièces sont réalisées séparément.

Il a été précisé précédemment que les deux parties du support 10 sont avantageusement réalisés de manière à former des dissipateurs thermiques et on pourra à cet effet prévoir de les réaliser en un matériau métallique. Le rotor 24 et/ou le stator 26 peuvent être réalisés en un matériau plastique, et à titre d'exemple du polyoxyméthylène (POM) ou tout autre matériau avec un faible coefficient de frottement qui permet une rotation aisée du rotor autour du stator.

Selon une autre variante de réalisation, également non représentée, le dispositif de guidage en rotation 14 peut comporter un roulement, notamment à billes, agencé entre le stator 26 et la portion annulaire 62 du rotor 24, pour faciliter la rotation du rotor par rapport au stator et améliorer la fonction de guidage en rotation.

Les différentes sources de lumière 8, 54 sont des sources à semi-conducteur, et de préférence du type diodes électroluminescentes et les plaques de support associées consistent en des plaques de circuit imprimés.

La source de lumière 8 est sensiblement alignée sur l'axe de rotation 4. On entend par l'expression " sensiblement alignée " que la distance entre le centre géométrique de la source de lumière telle qu'une diode électroluminescente et l'axe de rotation 4 du module lumineux 2 n'est pas supérieure aux dimensions de la diode électroluminescente. Tel que décrit précédemment, la source de lumière 8 est fixée et positionnée sur la première face externe de la première partie 28 du support 10, par l'intermédiaire d'une première plaque de circuits imprimés 34.

Les sources de lumière sont fixes dans le module lumineux 2 et leurs rayons lumineux émis sont orientés à l'opposé de la deuxième partie 30 du support 10. Ces sources de lumière 8, 54 peuvent avoir dans le module lumineux 2 des fonctions d'éclairages et/ou de signalisation distinctes suivant leurs localisations et les instructions de commande en fonctions des conditions de la route. Notamment, la source de lumière 8 est agencée pour émettre des rayons lumineux vers la face réfléchissante 20 des éléments de déviation optique 6, tandis que la ou les sources de lumière additionnelles sont agencées pour émettre à l'intérieur d'un écran 71 translucide participant à des fonctions esthétiques.

Nous allons maintenant décrire plus en détail l'agencement selon l'invention du faisceau de câbles 40 dans le module lumineux.

Il est notable que le faisceau de câbles 40 comporte une première portion 401 de raccordement à un module de commande, agencée au moins en partie dans la deuxième partie du support, une deuxième portion intermédiaire 402, traversant le dispositif de guidage en rotation 14, et une troisième portion 403 de raccordement à la source de lumière 8.

La première portion de raccordement 401 est reliée électriquement à des connecteurs d'un module de commande (non représentés), qui peuvent être embarqués sur le deuxième partie 30 du support, ou bien qui peuvent être agencés à l'extérieur du module lumineux, de sorte que la première portion de raccordement dépasse de la deuxième partie 30 en passant notamment par une fenêtre d'accès 52.

La troisième portion de raccordement 403 du faisceau de câbles est connectée à la plaque de support 34 de la source de lumière, et plus particulièrement au niveau du palier 44 dans l'exemple illustré. La troisième portion de raccordement s'étend dans un premier temps sensiblement perpendiculairement à la plaque de support 34, le long du méplat 42, en étant plaqué contre la face périphérique à l'arrière du module lumineux 2, et elle s'étend dans un deuxième temps sur une partie de la deuxième face d'extrémité interne 36, dans l'empreinte 38. Plus précisément, cette partie de la deuxième face d'extrémité interne 36 contre laquelle est plaqué le faisceau de câbles s'étend du bord du méplat 42 jusqu'au centre de la première partie 28 du support 10.

La deuxième portion intermédiaire 402 s'étend, sensiblement perpendiculairement, dans le prolongement de la troisième partie 403 de raccordement depuis le centre de la première partie 28 du support. De la sorte, le faisceau de câbles 40 s'étend sensiblement parallèlement à l'axe de rotation 4 du module lumineux, en traversant le dispositif de guidage 14 pour rejoindre la deuxième partie 30 du support 10. Le faisceau de câbles 40 traverse le dispositif de guidage 14, notamment au centre de la portion annulaire 32 du rotor 24 et au centre du stator 26.

Cet aménagement réalisé dans la première partie 28 du support 10, pour faire passer le faisceau de câbles 40 à travers le dispositif de guidage 14, autorise le pivotement jusqu'à 360 degrés des éléments de déviation optique 6 autour de l'axe de rotation 4 sans gêne du fait que le faisceau de câbles 40 traverse le support 10 par le dispositif de guidage 14. Par ailleurs, la présence d'une empreinte dans laquelle le faisceau de câbles peut être escamoté permet de ne pas créer de bossage sur la face d'extrémité interne 36 et de pouvoir amener au plus près le stator 24 contre la première partie 28 du support.

Dans une variante de réalisation non représentée, un évidement peut être configuré axialement à travers la première partie 28 du support 10, et notamment sensiblement au centre de celle-ci dans le prolongement du passage du faisceau de câbles à travers le dispositif de guidage en rotation 14, de sorte que la deuxième portion et la troisième portion de raccordement s'étendent sensiblement parallèlement.

Un fourreau peut avantageusement être disposé sur la première partie 28 du support 10, notamment sur l'empreinte 38. Ce fourreau est fixé à la première partie 28 au moins au niveau de l'empreinte 38, notamment par collage. Le fourreau, dimensionné pour loger le faisceau de câbles, sert alors à protéger ainsi qu'à guider le faisceau de câbles d'alimentation 40 disposé contre la première partie 28 du support 10.

On pourra monter les différentes parties du support et l'ensemble rotor-stator par exemple en retournant la deuxième partie du support et en disposant successivement dans la cavité de réception le stator, que l'on vient plaquer contre la paroi de fond de cette cavité de réception, le rotor, que l'on vient disposer autour du stator, puis la première partie 28 du support que l'on glisse entre les pattes de fixation 64 pour l'appuyer contre le stator 26. Lorsque cet empilement est effectué, on assemble les deux parties du support et le stator par des vis de serrage qui traversent chacun de ces composants, le rotor étant bloqué axialement, dans la direction de l'empilement, c'est-à-dire du vissage, entre la paroi de fond de la cavité et la face d'extrémité interne 36 de la première partie 28 du support, étant entendu que le diamètre de la portion annulaire 62 du rotor est tel qu'il peut entourer le stator, et éventuellement un roulement associé, et tel que cette portion annulaire est en butée contre la face d'extrémité interne 36 de la première partie 28 du support. On comprend que l'utilisation de matériau à faible coefficient de frottement permet de ne pas être gênée dans la rotation relative du rotor par rapport à la première partie du support malgré cette butée. On pourrait prévoir en variante que le stator présente une collerette prolongeant l'extrémité du stator venant en appui contre la face d'extrémité interne 36 de la première partie du support, et que le rotor vient en appui sur cette collerette plutôt que sur le support, afin de limiter les frottements.

Dans le mode de réalisation illustré, il peut être prévu que la deuxième partie 30 du support 10 peut présenter des excroissances 72, en saillie notamment de la portion centrale 48, diamétralement opposées, et alignées pour former un axe de rotation additionnel 74 (visible sur la figure 5) apte à coopérer avec des paliers (visible sur la figure 5) qui seront décrits ci-après. Les excroissances 72 peuvent consister en des pions cylindriques.

On comprendra que ces excroissances sont ici réalisées pour former un axe de rotation additionnel, distinct du premier axe de rotation tel qu'il a été présenté précédemment, autour duquel les éléments de déviation optique sont configurés pour tourner, via l'actionneur 12 et le dispositif de guidage en rotation 14. L'axe de rotation additionnel 74 permet au module lumineux 2 de pivoter et d'assurer un mouvement vertical du faisceau lumineux en sortie de module lumineux 2.

Bien entendu, la fonction de guidage en rotation autour du premier axe de rotation par le dispositif de guidage 14 et la disposition optimisée dans ce contexte du faisceau de câbles alimentant la source lumineuse, tel que cela vient d'être décrit précédemment, ne nécessite pas la présence de ces excroissances et de cet axe de rotation additionnel. On comprend que la présence de ces excroissances est facultative. Toutefois, il est intéressant de noter que la mise en œuvre de ce mouvement de rotation additionnel est facilité par le guidage en rotation très précis autour du premier axe, puisque la rotation autour de cet axe de rotation additionnel serait difficile à mettre en œuvre si un effet de porte à faux se produisait lors de la réalisation de la rotation autour du premier axe. Et il convient de noter que le faisceau de câbles 40 permet cette rotation autour de l'axe additionnel, en ce qu'il présente une troisième portion suffisamment grande pour présenter un jeu de fonctionnement susceptible d'accompagner le balancement du module. Lors de la rotation autour de l'axe de rotation additionnel, il convient de noter que la première portion du faisceau de câbles reste plaquée contre la première partie du support, avantageusement dans le logement formé par l'empreinte, et que la deuxième portion reste tendue le long du premier axe de rotation, à travers le dispositif de guidage en rotation 14 et notamment au centre du stator.

Le module lumineux selon l'invention, tel qu'il vient d'être décrit, participe à la formation d'un dispositif d'éclairage et/ou de signalisation, en ce qu'il est disposé dans un boîtier (non représenté) de projecteur de véhicule automobile fermé par une glace de projection, de manière à définir un logement du ou des modules selon l'invention. On comprend que l'on pourra disposer une pluralité de module lumineux tel qu'ils viennent d'être décrits pour former un dispositif d'éclairage et /ou de signalisation. Notons qu'il est avantageux que les deux projecteurs, gauche et droit, comporte un dispositif équivalent, avec un nombre équivalent de modules lumineux.

Selon des instructions de commande d'éclairage des sources de lumière et selon des instructions de commande en rotation du module lumineux 2, l'invention permet la réalisation de différentes combinaisons de fonctions et d'élargir la zone d'éclairage. Un pivotement transversal d'au moins un module lumineux 2 permet un éclairage sur la gauche ou la droite du véhicule en fonction des conditions de circulation et de route.

Le dispositif peut comporter à cet effet des moyens de détection d'une situation de conduite, des moyens de calculs d'une instruction de commande de fonctionnement du ou des modules lumineux 2 en fonction des informations envoyées par ces moyens de détection. Ces instructions de commande permettent une mobilité d'au moins un module en rotation horizontalement et/ou verticalement de sorte que le faisceau lumineux en sortie de module lumineux 2 qu'il génère puisse être orienté de façon à couvrir une grande zone d'éclairage et/ou de signalisation tout en respectant des contraintes d'encombrement du dispositif lumineux.

La figure 5 représente un dispositif d'éclairage et/ou de signalisation comprenant trois modules lumineux 2 mobiles en rotation de manière à déplacer transversalement la portion qu'il génère du faisceau global émis par le dispositif d'éclairage et/ou de signalisation.

Chaque module lumineux 2 est associé à une platine 76, ou une portion de platine 76, qui vient en recouvrement de la deuxième partie 30 du support 10. La platine 76 est fixée au boîtier et elle est configurée pour positionner la deuxième partie 30 du support 10 par rapport au projecteur.

Tel que représenté sur la figure 5, le dispositif comporte une platine unique qui recouvre l'ensemble des modules lumineux 2 compris dans le boîtier, mais on comprendra que chaque module lumineux 2 peut être associé à une platine individuelle, indépendante des autres platines.

Chacun des trois modules lumineux 2 est mobile en rotation autour d'un axe de rotation 4 qui lui est propre, et dans au moins un de ces modules lumineux, cette rotation est facilitée par un dispositif de guidage en rotation 14 tels qu'il vient d'être décrit. Un axe de rotation 4 a été représenté sur la figure 5 pour l'un des modules lumineux 2, et avantageusement, l'axe de rotation propre à chaque module lumineux 2 est sensiblement parallèle à l'axe de rotation des modules lumineux 2 voisins.

Dans l'exemple d'application illustré, la platine 76 participe à la mise en rotation du ou des module lumineux autour de l'axe de rotation additionnel 74 qui leur est propre. A cet effet, la platine 76 est porteuse d'au moins deux pattes de réception 77, venues de matière avec ou rapportées et rendues solidaires de la platine. Pour un module lumineux donné, deux pattes de réception 77 sont agencées de part et d'autre du module pour former des paliers de réception d'éléments en saillie du support 10, notamment les excroissances 72, telles que décrites précédemment. Les deux pattes de réception 77 présentent chacune une forme en crochet définissant une gorge 78 dans laquelle s'insère une des excroissances 72, de ladite deuxième partie 30 de support 10. Les gorges 78 sont agencées de façon coaxiale, et l'agencement des pattes de réception 77 et des excroissances 72 définit l'axe de rotation additionnel 74 pour le module lumineux 2, qui dans ce mode réalisation, est mobile en rotation suivant deux axes de rotations 4 et 74, distincts et non parallèles, et avantageusement perpendiculaires entre eux.

Dans une configuration donnée, le premier axe de rotation 4 est sensiblement vertical et permet la rotation horizontale (dans le sens gauche-droite et droite-gauche) du faisceau lumineux en sortie du module lumineux 2 correspondant, au sein du dispositif lumineux. L'axe de rotation additionnel 74 est sensiblement horizontal et permet le déplacement vertical (dans le sens haut-bas et bas-haut) du faisceau lumineux en sortie de module lumineux 2 correspondant, au sein du dispositif lumineux.

Tel que cela est visible sur la figure 5, le module lumineux 2 selon l'invention, peut comporter un écran 71 transparent disposé sur le chemin de sortie du faisceau lumineux du module lumineux 2. Cet écran 71 est agencé de manière à recevoir les rayons émis par la ou les sources de lumière additionnelles 54. L'écran 71 est ainsi destiné à produire un effet de style lorsque les sources de lumière additionnelles 54 sont allumées, sans gêner la formation d'un faisceau réglementaire lorsque la source de lumière principale 8 est allumée. On comprend que la présence d'un écran 71 n'a ici qu'une fonction additionnelle et que le module lumineux pourrait, tel qu'illustré sur les figures 1 à 3, ne pas comporter un tel écran en regard des éléments de déviation optique 6.

Le module lumineux 2 comporte en outre un dispositif de commande apte à formuler, sur la base d'informations reçues en provenance de capteurs d'état du véhicule des instructions de commande à envoyer à l'actionneur 12 et à des moyens d'actionnement (non représentés) responsable du mouvement de rotation autour de l'axe de rotation additionnel 74. Les instructions consistent à piloter la position angulaire du module lumineux 2 autour de l'axe de rotation 4 et éventuellement autour de l'axe de rotation additionnel 74.

La fonction d'éclairage peut alors être directionnelle, grâce à l'actionneur 12 et aux moyens d'actionnements propres au mouvement de rotation autour de l'axe de rotation additionnel 74 du module lumineux 2. Les mouvements de rotation autour de l'axe de rotation 4 et autour de l'axe de rotation additionnel 74 peuvent être simultanés et calibrés entre les deux axes ou totalement indépendants.

La rotation simultanée est notamment possible du fait de l'entrainement en rotation de l'actionneur 12 avec le module lumineux 2 lorsque celui-ci est entrainé en rotation autour de l'axe de rotation additionnel 74. On comprendra que lorsque le module lumineux 2 est entrainé en rotation autour de l'axe de rotation additionnel 74, la rotation selon le premier axe de rotation 4 est possible notamment grâce à une configuration prévue à cet effet.

Nous allons décrire maintenant le fonctionnement du dispositif lumineux, et notamment un premier mode dans lequel le faisceau lumineux en sortie de module lumineux 2 est décalé horizontalement, et un deuxième mode dans lequel le faisceau lumineux en sortie de module lumineux est décalé verticalement. Ces deux modes de fonctionnement peuvent fonctionner simultanément ou alternativement.

Le premier mode de fonctionnement consiste en ce que l'actionneur 12 transmet à l'arbre de sortie 16 un mouvement de rotation, ledit arbre de sortie 16 entrainant en rotation les éléments de déviation optique 6 autour de l'axe de rotation 4, la rotation étant guidée selon un chemin défini par la configuration du dispositif de guidage en rotation 14. Les éléments de déviation optique 6 tournent autour de l'axe de rotation 4 d'un angle défini par les instructions de commande envoyées à l'actionneur, tandis que le support 10 et les sources de lumière qu'il porte restent fixes. Un support équerre 80 fait le lien entre le support 10 de la source de lumière et l'actionneur 12, en étant d'une part solidaire de la deuxième partie 30 du support et d'autre part solidaire d'un support de fixation 82 de l'actionneur 12, grâce à des moyens de fixation, ici un fût de vissage agencé entre le support équerre et le support de fixation, et traversé par une vis de serrage non visible qui fixe le support équerre sur le support de fixation. Ce support équerre reste fixe pendant la rotation des éléments de déviation optique autour de l'axe de rotation 4. Cette rotation des éléments de déviation optique autour de l'axe de rotation 4 génère un déplacement des rayons émis par la source de lumière 8 de sorte que l'on peut générer un mouvement transversal du faisceau en sortie du dispositif d'éclairage et/ou de signalisation. On comprend que, selon l'invention, la rotation des éléments de déviation optique se fait sans être gênée par le faisceau de câbles qui reste, dans sa première portion et sa deuxième portion, tendu entre la deuxième partie et la première partie du support, qui sont fixes pendant cette rotation des éléments de déviation optique.

Le deuxième mode de fonctionnement consiste en ce que des moyens d'actionnement, non représentés sur la figure 5, sont aptes à pousser sur le support équerre 80 en sa partie basse, à l'opposé du support 10. Cette poussée sur le support équerre 80 entraîne un pivotement de l'ensemble du module autour de l'axe de rotation additionnel 74. Les excroissances 72 en saillie de la deuxième partie 30 du support 10 tournent dans les paliers 77 fixes portés par la platine 76. La partie basse du support équerre pivote, entraînant dans sa rotation autour de l'axe de rotation additionnel 74 le support de fixation 82 de l'actionneur 12, l'actionneur 12, l'arbre de sortie 16, les éléments de déviation optique 6, le dispositif de guidage en rotation 14 et les différentes parties du support 10. On comprend que lorsque le support équerre pivote, la deuxième partie 30 du support 10 est également entraînée en rotation autour de l'axe de rotation additionnel, ce qui entraîne dans la même rotation le dispositif de guidage en rotation 14 et la première partie 28 du support, puis les éléments de déviation optique et l'actionneur. Tous ces composants sont ainsi pris comme un seul ensemble solidaire en rotation autour de l'axe de rotation additionnel 74 pour réaliser un déplacement vertical du faisceau lumineux en sortie de module lumineux 2.

La description qui précède explique clairement comment l'invention permet d'atteindre les objectifs qu'elle s'est fixée et notamment de proposer un module lumineux d'éclairage et/ou de signalisation mobile en rotation selon au moins un axe de rotation grâce à l'actionneur 12, et sans contrainte grâce à un dispositif de guidage en rotation 14. Selon l'invention, la localisation du dispositif de guidage 14 à une extrémité des éléments de déviation optique à l'opposé de l'arbre de sortie 16 et de l'actionneur 12 permet un maintien en partie supérieure des éléments de déviation optique 6 lors de la rotation et d'ajuster au mieux la position de la source de lumière au foyer des éléments de déviation optique.

La configuration particulière du dispositif de guidage en rotation 14, à savoir un empilement des différents composants de ce dispositif de guidage avec différentes parties du support 10 portant la source de lumière permet de proposer avantageusement un ensemble compact et avec un jeu minime entre les différentes pièces du module lumineux 2, provoquant ainsi moins de vibrations et d'usure prématurée des différents composants. La fiabilité du mouvement de rotation dans le chemin de guidage autour de l'axe de rotation 4 du module lumineux 2 est alors augmentée.

## Revendications

1. Module lumineux (2) pour véhicule automobile comprenant
- au moins une source de lumière (8) apte à émettre des rayons lumineux,
- au moins un support (10) portant ladite source de lumière (8),
- au moins un câble (40) d'alimentation électrique de ladite au moins une source lumineuse,
- au moins un élément de déviation optique (6) agencé de manière à dévier les rayons lumineux émis par la au moins une source de lumière pour former un faisceau lumineux projeté en sortie du module lumineux,
- un dispositif de guidage (14) pour guider en rotation l'élément de déviation optique autour d'un axe de rotation (4), afin de déplacer transversalement le faisceau lumineux projeté,
- support (10) comportant une première partie (28), porteuse de la source de lumière (8), et une deuxième partie (30), entre lesquelles est intercalée au moins une partie du dispositif de guidage (14) en rotation de l'élément de déviation optique (6) et en ce que ledit au moins un câble (40) traverse le dispositif de guidage (14) en rotation pour être connecté à ladite source de lumière (8), **caractérisé en ce que** le dispositif de guidage (14) en rotation consiste en un stator (26) solidaire de la deuxième partie (30) du support (10) et en un rotor (24) solidaire de l'élément de déviation optique (6) et configuré pour tourner autour du stator (26).

2. Module lumineux (2) selon la revendication 1, **caractérisé en ce que** le au moins un câble (40) comporte une première portion (401) de raccordement à un module de commande, agencée au moins en partie dans la deuxième partie (30) du support, une deuxième portion intermédiaire (402), traversant le dispositif de guidage en rotation (14), et une troisième portion (403) de raccordement à la source de lumière (8).

3. Module lumineux (2) selon la revendication 1 ou 2, **caractérisé en ce que** le au moins un câble (40) traverse le dispositif de guidage (14) en rotation sensiblement au centre de celui-ci, de manière à être centré sur l'axe de rotation (4).

4. Module lumineux (2) selon l'une des revendications précédentes, **caractérisé en ce que** la première partie (28) du support (10) présente une première face porteuse de la source de lumière (8), une deuxième face (36) opposée tournée vers la deuxième partie (30) du support (10) et une face périphérique (32) reliant axialement la première et la deuxième face.

5. Module lumineux (2) selon les revendications 2 à 4, **caractérisé en ce que** la troisième portion du au moins un câble (40) est disposée le long de la deuxième face (36) et contre la face périphérique (32), de sorte que le au moins un câble (40) est au moins partiellement désaxé dans cette troisième portion (403) par rapport à l'axe de rotation (4) de l'élément de déviation optique (6).

6. Module lumineux (2) selon la revendication précédente, **caractérisé en ce qu'**une empreinte (38) est agencée au moins sur la deuxième face (36) pour loger la troisième portion (403) du au moins un câble (40).

7. Module lumineux (2) selon l'une des revendications 4 à 6, **caractérisé en ce qu'**un méplat (42) est formé axialement par usinage de la face périphérique (32), ledit au moins un câble (40) étant plaqué contre ledit méplat.

8. Module lumineux (2) selon l'une des revendications précédentes, **caractérisé en ce qu'**une plaque de support (34) de la source de lumière présente une première face porteuse de la source de lumière (8) et une deuxième face disposée contre la première face de la première partie (28) du support (10), ledit au moins un câble (40) étant connecté sur une deuxième face de la première plaque de support (34).

9. Module lumineux (2) selon l'une des revendications précédentes, **caractérisé en ce qu'**il comporte un fourreau de guidage du au moins un câble (40) fixé sur la première partie (28) du support (10).

10. Module lumineux (2) selon l'une des revendications précédentes, **caractérisé en ce qu'**au moins le stator (26) est percé axialement pour laisser le passage au au moins un câble (40) d'alimentation électrique de la source de lumière (8).

11. Module lumineux (2) selon l'une des revendications précédentes, **caractérisé en ce que** le stator (26) est enserré entre les deux parties (28,30) du support (10).

12. Dispositif lumineux, notamment d'éclairage et/ou de signalisation, comprenant au moins un module lumineux selon l'une des revendications précédentes.

13. Dispositif lumineux selon la revendication précédente, **caractérisé en ce qu'**il comporte un boîtier définissant avec une glace de fermeture un logement de réception d'au moins un module lumineux.

## Patentansprüche

1. Leuchtmodul (2) für ein Kraftfahrzeug, umfassend
- mindestens eine Lichtquelle (8), die geeignet ist, Lichtstrahlen auszusenden,
- mindestens eine Halterung (10), welche die Lichtquelle (8) trägt,
- mindestens ein Kabel (40) zur Stromversorgung der mindestens einen Lichtquelle,
- mindestens ein optisches Ablenkelement (6), das so angeordnet ist, dass es die von der mindestens einen Lichtquelle ausgesendeten Lichtstrahlen ablenkt, um ein aus dem Leuchtmodul heraus projiziertes Lichtbündel zu bilden,
- eine Führungsvorrichtung (14), um das optische Ablenkelement um eine Drehachse (4) herum drehend zu führen, um das projizierte Lichtbündel quer zu verlagern,
- wobei die Halterung (10) einen die Lichtquelle (8) tragenden ersten Teil (28) und einen zweiten Teil (30) beinhaltet, zwischen denen mindestens ein Teil der Drehführungsvorrichtung (14) des optischen Ablenkelements (6) eingefügt ist, und das mindestens eine Kabel (40) die Drehführungsvorrichtung (14) durchquert, um an die Lichtquelle (8) angeschlossen zu werden, **dadurch gekennzeichnet, dass** die Drehführungsvorrichtung (14) aus einem mit dem zweiten Teil (30) der Halterung (10) fest verbundenen Stator (26) besteht und aus einem Rotor (24), der mit dem optischen Ablenkelement (6) fest verbunden ist und dazu ausgestaltet ist, um den Stator (26) herum zu drehen.

2. Leuchtmodul (2) nach Anspruch 1, **dadurch gekennzeichnet, dass** das mindestens eine Kabel (40) einen ersten Abschnitt (401) zum Anschließen an ein Steuermodul, der mindestens teilweise in dem zweiten Teil (30) der Halterung angeordnet ist, einen zweiten Zwischenabschnitt (402), der die Drehführungsvorrichtung (14) durchquert, und einen dritten Abschnitt (403) zum Anschließen an die Lichtquelle (8) beinhaltet.

3. Leuchtmodul (2) nach Anspruch 1 oder 2, **dadurch gekennzeichnet, dass** das mindestens eine Kabel (40) die Drehführungsvorrichtung (14) im Wesentlichen in deren Mitte durchquert, so dass es auf die Drehachse (4) zentriert ist.

4. Leuchtmodul (2) nach einem der vorhergehenden Ansprüche, **dadurch gekennzeichnet, dass** der erste Teil (28) der Halterung (10) eine die Lichtquelle (8) tragende erste Fläche, eine entgegengesetzte, zum zweiten Teil (30) der Halterung (10) gewandte zweite Fläche (36) und eine Umfangsfläche (32), welche die erste und die zweite Fläche axial verbindet, aufweist.

5. Leuchtmodul (2) nach den Ansprüchen 2 bis 4, **dadurch gekennzeichnet, dass** der dritte Abschnitt des mindestens einen Kabels (40) entlang der zweiten Fläche (36) und gegen die Umfangsfläche (32) angeordnet ist, so dass das mindestens eine Kabel (40) in diesem dritten Abschnitt (403) mindestens teilweise in Bezug auf die Drehachse (4) des optischen Ablenkelements (6) versetzt ist.

6. Leuchtmodul (2) nach dem vorhergehenden Anspruch, **dadurch gekennzeichnet, dass** ein Hohlraum (38) mindestens an der zweiten Fläche (36) angeordnet ist, um den dritten Abschnitt (403) des mindestens einen Kabels (40) aufzunehmen.

7. Leuchtmodul (2) nach einem der Ansprüche 4 bis 6, **dadurch gekennzeichnet, dass** eine Abflachung (42) axial durch Bearbeiten der Umfangsfläche (32) gebildet ist, wobei das mindestens eine Kabel (40) gegen die Abflachung gepresst ist.

8. Leuchtmodul (2) nach einem der vorhergehenden Ansprüche, **dadurch gekennzeichnet, dass** eine Halterungsplatte (34) der Lichtquelle eine die Lichtquelle (8) tragende erste Fläche und eine gegen die erste Fläche des ersten Teils (28) der Halterung (10) angeordnete zweite Fläche aufweist, wobei das mindestens eine Kabel (40) auf einer zweiten Fläche der ersten Halterungsplatte (34) angeschlossen ist.

9. Leuchtmodul (2) nach einem der vorhergehenden Ansprüche, **dadurch gekennzeichnet, dass** es eine Hülse zum Führen des mindestens einen Kabels (40) umfasst, die an dem ersten Teil (28) der Halterung (10) befestigt ist.

10. Leuchtmodul (2) nach einem der vorhergehenden Ansprüche, **dadurch gekennzeichnet, dass** mindestens der Stator (26) axial durchbohrt ist, um das mindestens eine Kabel (40) zur Stromversorgung der Lichtquelle (8) durchzulassen.

11. Leuchtmodul (2) nach einem der vorhergehenden Ansprüche, **dadurch gekennzeichnet, dass** der Stator (26) zwischen den beiden Teilen (28, 30) der Halterung (10) eingespannt ist.

12. Leuchtvorrichtung, insbesondere zur Beleuchtung und/oder Signalisierung, die mindestens ein Leuchtmodul nach einem der vorhergehenden Ansprüche umfasst.

13. Leuchtvorrichtung nach dem vorhergehenden Anspruch, **dadurch gekennzeichnet, dass** sie ein Gehäuse beinhaltet, das mit einer Abschlussscheibe einen Raum zur Aufnahme mindestens eines Leuchtmoduls definiert.

## Claims

1. Light module (2) for a motor vehicle comprising
- at least one light source (8) capable of emitting light rays,
- at least one support (10) bearing said light source (8),
- at least one electrical power supply cable (40) of said at least one light source,
- at least one optical deflection element (6) arranged so as to deflect the light rays emitted by the at least one light source to form a projected light beam at the output of the light module,
- a guiding device (14) for guiding the optical deflection element in rotation about an axis of rotation (4), in order to transversely shift the projected light beam,
the support (10) comprising a first part (28), bearing the light source (8), and a second part (30), between which there is inserted at least a part of the rotation guiding device (14) of the optical deflection element (6) and said at least one cable (40) passes through the rotation guiding device (14) to be connected to said light source (8) **characterized in that** the rotation guiding device (14) consists of a stator (26) secured to the second part (30) of the support (10) and of a rotor (24) secured to the optical deflection element (6) and configured to rotate about the stator (26).

2. Light module (2) according to Claim 1, **characterized in that** the at least one cable (40) comprises a first portion (401) for connection to a control module, arranged at least partly in the second part (30) of the support, a second intermediate portion (402), passing through the rotation guiding device (14), and a third portion (403) for connection to the light source (8).

3. Light module (2) according to Claim 1 or 2, **characterized in that** the at least one cable (40) passes through the rotation guiding device (14) substantially at the center thereof, so as to be centered on the axis of rotation (4).

4. Light module (2) according to one of the preceding claims, **characterized in that** the first part (28) of the support (10) has a first face bearing the light source (8), an opposite second face (36) turned toward the second part (30) of the support (10) and a peripheral face (32) axially linking the first and the second face.

5. Light module (2) according to Claims 2 to 4, **characterized in that** the third portion of the at least one cable (40) is arranged along the second face (36) and against the peripheral face (32), such that the at least one cable (40) is at least partially offset in this third portion (403) relative to the axis of rotation (4) of the optical deflection element (6).

6. Light module (2) according to the preceding claim, **characterized in that** an indentation (38) is arranged at least on the second face (36) to house the third portion (403) of the at least one cable (40).

7. Light module (2) according to one of Claims 4 to 6, **characterized in that** a flat (42) is formed axially by machining the peripheral face (32), said at least one cable (40) being pressed against said flat.

8. Light module (2) according to one of the preceding claims, **characterized in that** a support plate (34) of the light source has a first face bearing the light source (8) and a second face arranged against the first face of the first part (28) of the support (10), said at least one cable (40) being connected to a second face of the first support plate (34).

9. Light module (2) according to one of the preceding claims, **characterized in that** it comprises a guiding sleeve for the at least one cable (40) fixed to the first part (28) of the support (10).

10. Light module (2) according to one of the preceding claims, **characterized in that** at least the stator (26) is pierced axially to allow the passage of the at least one electrical power supply cable (40) of the light source (8).

11. Light module (2) according to one of the preceding claims, **characterized in that** the stator (26) is gripped between the two parts (28,30) of the support (10).

12. Light device, notably for lighting and/or signaling, comprising at least one light module according to one of the preceding claims.

13. Light device according to the preceding claim, **characterized in that** it comprises a casing defining, with an enclosing outer lens, a housing for receiving at least one light module.
